# EUROPEAN PATENT SPECIFICATION

(11) **EP 3 173 385 B1**
(45) Date of publication and mention of the grant of the patent: **26.09.2018**
(21) Application number: 15306869.7
(22) Date of filing: 25.11.2015
(51) Int. Cl.: C03B 18/22

(54) **FLOAT GLASS PRODUCTION PROCESS AND INSTALLATION**
FLOATGLASHERSTELLUNGSVERFAHREN UND -INSTALLATION
PROCÉDÉ DE PRODUCTION DE VERRE FLOTTÉ ET INSTALLATION

(43) Date of publication of application: 31.05.2017
(73) Proprietor: L'AIR LIQUIDE, SOCIETE ANONYME POUR L'ETUDE ET L'EXPLOITATION DES PROCEDES GEORGES CLAUDE, 75007 Paris (FR)
(72) Inventor: BANDYO, Shashwat, 169588 Singapore (SG); JARRY, Luc, 61270 Beaufau (FR)
(74) Representative: De Vleeschauwer, Natalie Y.L.D.

(56) References cited:
- US-A- 2 911 759
- US-A- 3 976 460
- DATABASE WPI Week 201465 25 September 2014 (2014-09-25) Thomson Scientific, London, GB; AN 2014-R60581 XP002757854, -& WO 2014/148510 A1 (ASAHI GLASS CO LTD) 25 September 2014 (2014-09-25)

## Description

The present invention relates to a float glass production process and to a float glass production installation.

In the float glass production process, in short "float process", a continuous stream of molten glass from a glass melting furnace is poured onto the surface of a bath of molten tin inside a chamber referred to as the "float bath". The molten glass spreads over the surface of the tin melt and forms a glass ribbon which floats on the tin bath. The glass ribbon is moved along the tin bath by conveyor rollers located opposite the molten glass inlet.

Initially, i.e. in the vicinity of the molten glass inlet, the glass is maintained at a sufficiently high temperature for the glass to spread and even out on top of the tin bath. Further downstream, the ribbon is progressively cooled until its viscosity is high enough for the ribbon to be lifted from the tin bath by the conveyor rollers without being damaged.

A first critical aspect of the float process is therefore a closely controlled temperature profile of the glass ribbon in the float chamber.

Temperature control within the float bath is achieved by means of electrical heating elements in or near the roof of the float bath, optionally in combination with cooling elements proximate the glass ribbon at the downstream end of the float bath. A typical float bath may be equipped with hundreds of heating electrodes heating different zones of the float bath. Proper temperature control saves energy and reduces the amount of glass rejects, thus increasing the productivity of the float chamber.

A second critical aspect is the need to prevent oxidation of the molten tin. This is achieved by maintaining a reducing atmosphere throughout the float bath.

Good practice requires a gas turnover of at least 3 to 5 times per hour, the gas turnover being the number of times per hour the reducing atmosphere in the float bath is completely replaced.

A typical float tank consumes about 1200 to 1500 Nm³/h of high purity nitrogen and 70 to 100 Nm³/h of high purity hydrogen to provide a nitrogen/hydrogen reducing atmosphere for the tin bath.

An additional function of the reducing atmosphere is to blanket the glass inlet and exit of the float tank to prevent infiltration of oxygen-containing air.

Conventionally, a gas corresponding to the reducing atmosphere is injected into the top of the float bath at near-ambient temperature and is heated by the electrical heating elements before it comes into contact with the glass ribbon and the molten tin. The gas is thereafter evacuated from the float chamber and vented into the atmosphere.

In order to reduce the gas consumption of the float chamber, recycling systems for the reducing atmosphere have been proposed, whereby the evacuated gas is subjected to cooling, filtering, H₂S-removal, O₂-removal, H₂O-removal and optionally other purification steps. The cooled and purified gas is then topped up with fresh gas, for example fresh nitrogen and hydrogen, before being re-injected into the float chamber in the manner previously described.

US2911759 A discloses a float glass process using molten tin as initially developed by Pilkington in the 1950s. In this document, the focus is on the float glass process itself, while it is taken for granted that a skilled person knows glass melting, such as in a commonly known Siemens regenerative furnace. In the space above the molten tin a reducing atmosphere is maintained, that may be for instance "ordinary coal gas" (= mixture of mainly H₂, CO, H₂O, N₂, CO₂). This gas is pre-heated using the energy of a flue of "hot products of combustion", whereby these hot combustion products are not taken from the furnace exhaust gases, but the float chamber itself includes burners for pre-heating the reducing atmosphere.

With or without a recycling system for the reducing atmosphere, a significant part of the electrical energy consumption of the float bath is used to heat the gas inside the float bath before it comes into contact with the glass ribbon and the tin bath.

It is an aim of the present invention to provide a float process with improved energy efficiency.

In accordance with the present invention, this is achieved by means of a glass production process in which molten glass is produced in a melting furnace heated by combustion of a fuel with an oxidant.

The oxidant may be air, but is preferably an oxygen-rich oxidant, i.e. an oxidant having an oxygen content which is greater than 21%vol and up to 100% vol. The oxygen content of the oxygen-rich oxidant advantageously at least 50%vol, more advantageously at least 80%vol, preferably at least 90%vol and more preferably at least 97%vol. The fuel and the oxidant are hereafter collectively referred to as the "combustion reactants".

The combustion of the fuel in the melting furnace generates heat and combustion gases or fumes. The fumes are evacuated from the melting furnace at a temperature of at least 900°C and up to 1550°C.

From the melting furnace, the molten glass is continuously poured into the float chamber, i.e. into the float bath.

The molten glass forms a glass ribbon which floats on a molten tin bath inside the float chamber. This glass ribbon is thereafter continuously evacuated from the float chamber by means of conveyor rollers.

During said process, a gas composition, also referred to as "reducing gas composition" and consisting for at least 99.9% vol and up to 100% vol of an inert gas and a reducing gas, is introduced into the float chamber so as to maintain a reducing atmosphere above the tin bath and the glass ribbon.

This gas composition is continuously or intermittently evacuated from the float chamber and replaced with new reducing gas composition. In this manner, the composition of the reducing atmosphere in the float chamber can be maintained effective and substantially constant.

In accordance with the present invention, a gas component, corresponding to at least part of the gas composition, is preheated by heat exchange with the fumes evacuated from the melting chamber before said preheated gas component is introduced into the float chamber as part of the gas composition, whereby said part may be 100% of the gas composition, i.e. the gas composition itself.

According to a preferred embodiment of the invention, the gas component is preheated by indirect heat exchange with the fumes evacuated from the melting furnace.

In the present context, the expression "indirect heat exchange" between a first and a second fluid refers to a process whereby the first fluid, which is a relatively hot fluid, is used to heat an intermediate heat-transfer fluid by heat exchange or heat transfer across a first wall separating the two fluids. Thereafter, the thus heated heat-transfer fluid is used to heat the second fluid by heat exchange or heat transfer across a second wall separating the heat-transfer fluid and the second fluid.

The expression "direct heat exchange" between a first and a second fluid refers to a process whereby the first fluid, which is a relatively hot fluid, is used to heat the second fluid by heat transfer across a wall separating the first fluid and the second fluid.

Thus, in the above-described indirect heat exchange, the first fluid heats the intermediate heat-transfer fluid by direct heat exchange and the heated heat-transfer fluid heats the second fluid by direct heat exchange.

According to one example of the glass production process whereby the gas component is preheated by indirect heat exchange with the fumes, the fumes evacuated from the melting furnace are introduced into a boiler, in particular a heat recovery boiler, in order to generate steam. This generated steam is thereafter used as the heated heat-transfer fluid for preheating the gas component by direct heat exchange with the steam.

According to an alternative embodiment, the fumes evacuated from the melting furnace are used to heat a gaseous intermediate heat transfer fluid, referred to as "intermediate gas", by direct heat exchange with the fumes and the thus obtained heated intermediate gas is used to preheat the gas component by direct heat exchange with the heated intermediate gas. In that case, the heated intermediate gas is preferably also used to preheat at least one of the combustion reactants by direct heat exchange.

In other words, the heated intermediate gas is then also used to heat part or all of the fuel and/or of the oxidant by direct heat exchange upstream of the melting furnace, preferably at least (part of) the oxidant and, more preferably both (at least part of) the oxidant and (at least part of) the fuel.

The preheating of the gas component and of the at least one combustion reactant can be conducted in parallel or in series, depending, in particular, on the temperature at which said fluids are to be preheated.

The intermediate gas may advantageously be air, which is freely available and generally safe to use. Other intermediate gases may also be used.

After the preheating step or steps, the intermediate gas may be released into the atmosphere, in particular when the intermediate gas is air.

When air is used as the oxidant in the glass melting furnace and as intermediate gas, at least part and optionally all of the heated intermediate gas (i.e. heated air) may be used as oxidant in the glass melting furnace after having been used to preheat the glass component (as described above) and, optionally, after also having been used to preheat (at least part of) the fuel (as also described above).

The intermediate gas may also circulate in a closed loop. In that case, after the preheating step or steps, the intermediate gas is again heated by direct heat exchange with the fumes evacuated from the furnace. This embodiment is particularly desirable when the intermediate gas is a gas other than air, but is also useful when the intermediate gas is air.

The gas composition may likewise circulate in a closer loop. In that case, the gas composition evacuated from the float chamber is cooled, purified and, where necessary, topped up with additional gas composition, in particular with additional reducing gas and/or additional inert gas, before being reintroduced into the float chamber in the manner described above.

In the present context, "inert gas" refers to a gas which does not react with the molten tin or with the glass in the float chamber. The inert gas may in particular be nitrogen, argon or helium or a mixture of at least two of said gases. Nitrogen is generally preferred as the inert gas for use in the present invention.

The reducing gas may be ethane, methane, hydrogen, ammonia or carbon monoxide or a mixture of at least two of said gases. Hydrogen is generally preferred as the reducing gas for use in the present invention.

Consequently, the preferred reducing gas composition consists for at least 99.9% vol and up to 100% vol of nitrogen and hydrogen.

In particular when the fumes evacuated from the melting furnace are not heavily charged with dust and/or substances susceptible to condense during the preheating step, the gas component may also be preheated by direct heat exchange with the fumes evacuated from the melting furnace.

In that case, the fumes evacuated from the melting furnace may also be used to preheat (part of) at least one of the combustion reactants. It is preferred that (part or all of) the oxidant is preheated by means of the evacuated fumes, more preferably (part or all) of the oxidant and (part or all) of the fuel. This preheating of at least one of the combustion reactants is in this case preferably achieved by direct heat exchange between the evacuated fumes and the combustion reactant(s).

According to an alternative embodiment, the gas component is preheated by direct heat exchange with the fumes evacuated from the melting furnace, whereafter the preheated gas component is used to preheat (all or part of) at least one of the combustion reactants (i.e. the oxidant, the fuel, or the oxidant and the fuel) by direct heat exchange between the at least one combustion reactant with the preheated gas component.

Following the preheating of the at least one combustion reactant, the preheated gas component is introduced in the float chamber as described above and the at least one preheated combustion reactant is supplied to the melting furnace for combustion therein.

According to one embodiment, a flow of gas component circulates in a closed loop which does not include the float chamber.

In that case, said flow of gas component may be heated by direct heat exchange with the fumes evacuated from the melting furnace. The thus heated flow of gas component is then used to preheat (part or all) of at least one of the combustion reactants (i.e. part or all of the oxidant, of the fuel or of both the oxidant and the fuel).

In addition, a portion of the heated flow of gas component is extracted from the closed loop upstream or downstream of the preheating of the at least one combustion reactant, or alternatively between the heating of both combustion reactants. The extracted portion of the heated flow of gas component is introduced into the float chamber as part of the gas composition in the manner described above.

The gas component which is preheated in accordance with the present invention may be the inert gas, in particular nitrogen. Alternatively, the gas component and the gas composition introduced into the float chamber may have an identical or a substantially identical chemical composition.

According to one embodiment, the gas composition evacuated from the float chamber is released into the atmosphere, preferably following the removal of at least some pollutants present therein.

According to a further embodiment, the gas component which is preheated comprises or consists of gas composition which has been previously evacuated from the float chamber.

In that case, at least part of the reducing gas composition which is evacuated from the float chamber is recycled and is preheated before being reintroduced into the float chamber.

In that case, it is generally advisable to purify the recycled part of the evacuated gas composition before it is reintroduced into the float chamber. As such a purification of the evacuated gas composition usually requires the gas composition to be cooled, the purification of the evacuated gas composition advantageously takes place before the recycled part of the gas composition is preheated in accordance with the invention and reintroduced into the float chamber.

When the gas component comprises or consists of gas composition which has previously been evacuated from the float chamber, it is topped up with fresh reducing gas, such as hydrogen, and/or fresh inert gas, such as nitrogen, before or after being preheated and before being reintroduced into the float chamber. In this manner, it can be ensured that the gas composition introduced into the float chamber has the required reducing-gas composition and that sufficient gas composition is available to ensure the required gas turnover in the float chamber.

The process according to the present invention thus uses heat present in the fumes evacuated from the upstream melting furnace to preheat a gas component of the reducing gas composition before the gas composition is introduced into the float chamber so as to generate a regularly renewed reducing atmosphere inside the float chamber. By thus preheating a gas component of the gas composition, the essential temperature control of the float chamber is facilitated, and the amount of additional energy, in particular electricity, required for the temperature control within the float chamber, typically by means of heating elements in or near the roof of the float bath, is very significantly reduced, thus improving the overall energy efficiency of the glass production process.

According to an optimized embodiment, the process of the invention includes the step of detecting the temperature with which the gas composition is introduced into the float chamber and the step of adjusting the heat supplied by said heating elements in function of the detected temperature, thereby ensuring that the desired temperature profile is maintained inside the float chamber with minimal energy consumption by said heating elements.

The present invention also relates to a glass production installation suitable for use in the process of the invention.

Said installation comprises a glass melting furnace equipped with one or more burners. The melting furnace has a molten-glass outlet and a fumes outlet.

The installation also comprises a float chamber downstream of the molten-glass outlet of the melting furnace.

The float chamber has a basin for containing a molten tin bath. The float chamber has a roof above the basin, a molten-glass inlet and conveyor rolls for evacuating a glass ribbon from the float chamber via a glass outlet.

The float chamber further comprises one or more gas inlets for introducing a reducing gas composition into the float-chamber and a gas outlet for evacuating the reducing gas composition from the float chamber. The one or more gas inlets are located in or adjacent the roof of the float chamber.

The float chamber is usually also equipped with at least one and generally more than one heating element in or near the roof of the float chamber and may comprise one or more cooling elements above the basin near the glass outlet.

The glass production installation also includes a heat-recovery unit downstream of the fumes outlet of the melting furnace.

This heat-recovery unit is adapted for recovering heat from fumes evacuated from the melting furnace via its fumes outlet.

In accordance with the present invention, the heat-recovery unit is connected to a source of a gas component selected among:
- inert gas,
- a gas composition consisting for at least 99.9% vol (i.e. from 99.9% to 100% vol) of inert gas and reducing gas.

As mentioned earlier, the inert gas is preferably nitrogen and the reducing gas is preferably hydrogen. The preferred gas composition consists for at least 99.9%vol of nitrogen and hydrogen.

The heat recovery unit is further adapted for preheating the gas component by direct or indirect heat exchange with fumes evacuated from the melting furnace via its fumes outlet.

The heat recovery unit presents a gas-component outlet. This gas-component outlet is in fluid connection with at least one gas inlet of the float chamber, and preferably with all gas inlets of the float chamber. By means of this fluid connection, gas component heated in the heat recovery unit can be introduced into the float chamber.

In the present context, two elements are "in fluid connection" or "fluidly connected" when said two elements are connected, for example by means of a channel or conduct, so as to enable a fluid to flow from one of the elements to or into the other of the two elements.

According to one embodiment of the installation, the gas outlet of the float chamber is in fluid connection with a stack for venting gas evacuated from the float chamber via its gas outlet into the atmosphere.

The heat recovery unit may also comprise a closed circulation circuit which fluidly connects the gas outlet of the float chamber to the one or more gas inlets of the float chamber, thereby enabling reducing gas composition evacuated from the float chamber to be recycled back into the float chamber. As already described above, this generally requires cooling and purification of the evacuated reducing gas, so that said closed circulation circuit generally comprises at least one cooling unit and at least one purification unit. Due to the chemical reactions of the reducing gas composition, and more specifically of the reducing gas, in the float chamber and reducing gas composition loss during purification, it is generally necessary to top up the recycled reducing gas composition before it is reintroduced into the float chamber. Thereto, the closed circulation circuit is in fluid connection with at least a source of inert gas and a source of reducing gas.

When the heat recovery unit comprises such a closed circulation loop, the heat recovery unit is normally adapted to heat recycled reducing gas composition in said circuit downstream of the cooling and purification unit.

In that case, the gas component heated by the heat recovery unit is the purified recycled reducing gas composition and the float chamber acts as a source of said gas component.

In the absence of such a closed circulation circuit the gas component to be heated in the heat recovery unit is typically:
- inert gas from a source of inert gas, before the inert gas is admixed with reducing gas to form the reducing gas composition or
- the reducing gas composition itself before it is introduced into the float chamber.

The heat recovery unit of the installation according to the invention may be adapted for heating the gas component by indirect heat exchange with the fumes in that said unit comprises:
- a heat recovery boiler for generating steam by heat exchange with fumes evacuated from the melting furnace via the fumes outlet; and, downstream of said heat recovery boiler,
- a heat exchanger for heating the gas component by direct heat exchange with the steam generated in the heat recovery boiler.

Instead of a heat recovery boiler, a heat recovery unit for heating the gas component by indirect heat exchange with the fumes may be used which comprises:
- a primary heat exchanger for heating an intermediate gas by direct heat exchange with fumes evacuated from the melting furnace via its fumes outlet and
- a secondary heat exchanger for heating the gas component by direct heat exchange with the intermediate gas heated in the primary heat exchanger.

In the present context, the term "heat exchanger" refers to a device in which two fluids circulate in different circuits which are separated from one another by at least one wall, the heat exchange wall, which is in contact with both fluids and through which heat can be transferred from the hotter of the two fluids to the cooler of the two fluids.

The primary and secondary heat exchangers may be two different heat exchange devices or may be part of a single heat exchange device.

The primary heat exchanger and the secondary heat exchanger may be integrated in a closed circulation loop of the intermediate gas. By means of said closed circulation loop, the intermediate gas heated in the primary heat exchanger is transported to the secondary heat exchanger as a heat source for heating the gas component. Thereafter, the closed circulation loop transports the now cooled intermediate gas back to the primary heat exchanger.

Alternatively, the intermediate gas may be transported in an open circuit and not be returned to the primary heat exchanger after having been used to heat the gas component in the secondary heat exchanger.

According to a specific embodiment, the heat-recovery unit comprises a further heat exchanger in addition to the primary and secondary heat exchangers. Said further heat exchanger is fluidly connected to a source of a combustion reactant which is:
- an oxidant, or
- a fuel.

In addition, the further heat exchanger is also fluidly connected to at least one burner of the melting furnace for the supply of the combustion reactant heated in the further heat exchanger to said at least one burner

The oxidant is preferably an oxygen-rich oxidant as defined above.

The secondary heat exchanger and the further heat exchanger may be positioned in series or in parallel to one another with respect to the flow of the intermediate gas which has been heated in the primary heat exchanger. When the secondary and further heat exchangers are positioned in series, the secondary heat exchanger may be upstream or downstream of the further heat exchanger. The further heat exchanger may comprise a heat exchanger for preheating fuel by direct heat exchange with the intermediate gas and a heat exchanger for preheating the oxidant by direct heat exchange with said intermediate gas.

Each one of said heat exchangers may be positioned in parallel or in series (upstream or downstream) with the secondary heat exchanger, as described above with respect to the further heat exchanger as such. The primary, the secondary and the further heat exchanger may all be integrated in a closed circulation loop of the intermediate gas as described above.

According to an alternative embodiment, the heat recovery unit may comprise a first heat exchanger adapted for heating the gas component by direct heat exchange with the fumes evacuated from the melting furnace via its fumes outlet. As already mentioned above, this embodiment is particularly useful when said fumes are not heavily loaded with dust and/or pollutants which may condense in the first heat exchanger.

In that case too, the installation may comprise a further heat exchanger as described above in the context of the embodiment with indirect gas component heating. Optionally, the further heat exchanger comprises a fuel heat exchanger and an oxidant heat exchanger.

In some cases, the further heat exchanger may be adapted for preheating fuel and/or oxidant by means of direct heat exchange with the fumes evacuated from the melting furnace.

According to a preferred embodiment, the further heat exchanger is adapted for heating fuel and/or oxidant by means of direct heat exchange with the gas component heated in the first heat exchanger.

In that case, the heat recovery unit may comprise a closed gas circulation circuit for circulating a flow of the gas component, for example a flow of inert gas or a flow of a gas with the same chemical composition as the reducing gas composition introduced into the float chamber, between the first heat exchanger where the gas component is heated and the further heat exchanger where the heated gas component is used to preheat fuel and/or oxidant. Such a closed gas circulation circuit further presents a bleed opening and a feed opening.

The bleed opening is in fluid connection with at least one gas inlet of the float chamber.

The bleed opening is thus adapted for extracting a portion of the gas component heated in the first heat exchanger and for introducing same into the float chamber as at least part of the gas composition.

The feed opening of the gas circulation circuit is in fluid connection with a source of the gas component and is thus adapted to replace the extracted portion of gas component with new gas component from said source.

The float chamber of the glass production installation typically comprises heating elements located in or adjacent its roof as well as a control unit for controlling the heat generated by each of said heating elements.

According to a preferred embodiment of the installation, it also comprises one or more temperature detectors for detecting the temperature of the gas composition which is introduced into the float chamber via the one or more gas inlets. In that case, the control unit is advantageously adapted to control the heat generated by each one of the heating elements in function of the detected temperature(s) of the gas composition introduced into the float chamber and in particular in function of the detected temperature(s) of the gas composition injected via the one or more gas inlets closest to the respective heating element.

The present invention and its advantages are illustrated in the following examples, reference being made to figures 1 to 3, whereby:
- figure 1 is a schematic representation of a first embodiment of the invention;
- figure 2 is a schematic representation of a second embodiment of the present invention; and
- figure 3 is a schematic cross-section representation of a float chamber suitable for use in the present invention.

In the following examples, the inert gas is nitrogen and the reducing gas is hydrogen.

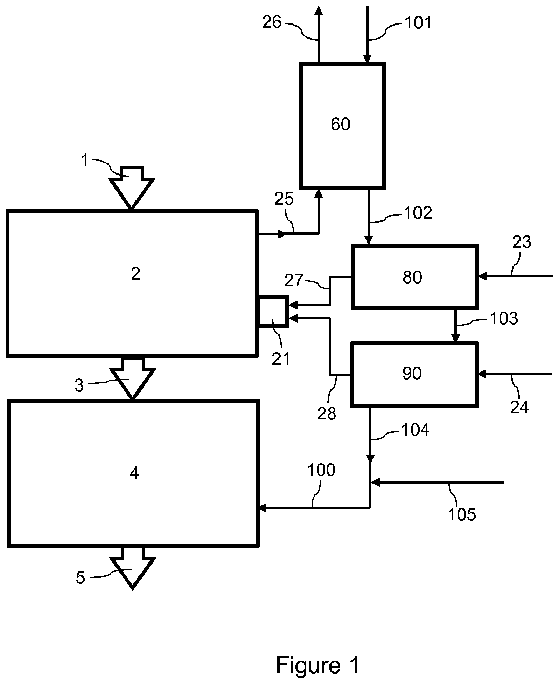

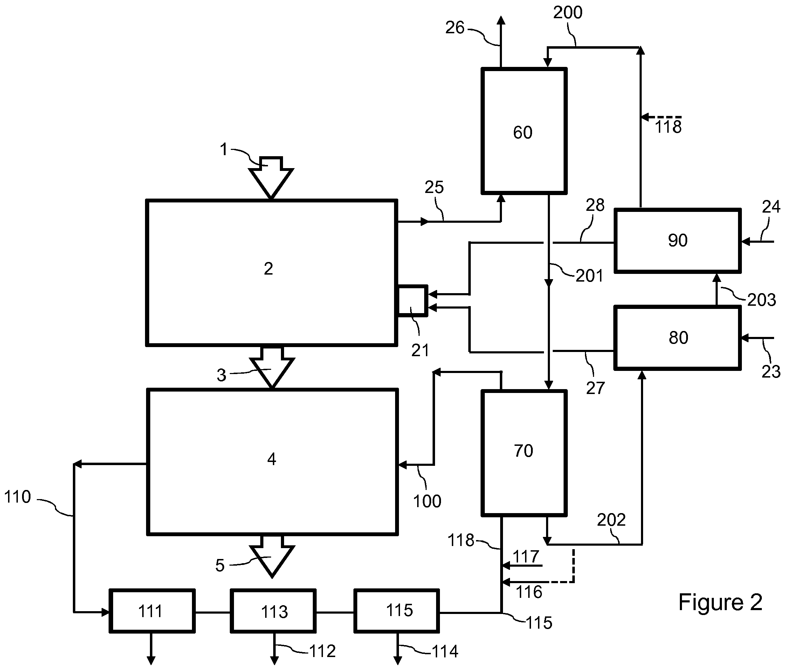

As illustrated in figures 1 and 2, solid glass-forming material 1, often referred to as "batch", is introduced into a melting furnace 2.

In melting furnace 2, the glass-forming material 1 is heated and melted.

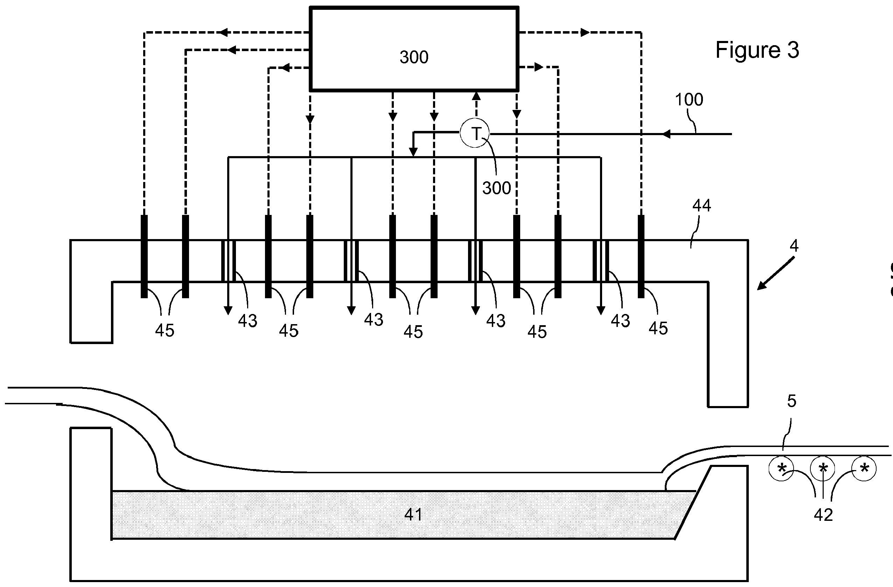

The molten glass 3 thus obtained is introduced into a float chamber 4, downstream of the melting furnace 2. As illustrated in figure 3, inside the float chamber 4, the molten glass 3 spreads across the surface of a bath 41 of molten tin. The molten glass 3 then progressively cools down as it travels through the float chamber 4 until a glass ribbon 5 is formed which can be evacuated from the float chamber 4 by means of conveyor rollers 42.

As also illustrated in figure 3, a gas composition 100 is introduced into one or more openings 43 in the roof 44 of the float chamber 4 (four such openings 43 are represented in figure 3), so as to maintain a reducing atmosphere above the tin bath and the glass ribbon. The outlet opening(s) through which the gas composition is regularly evacuated from float chamber 4 is/are not represented.

In addition, the float chamber 4 also comprises a number of heating elements 45, such as electrical heaters, which are used to maintain the desired temperature profile in the float chamber 4 so as to obtain the desired temperature profile of the glass -5 as it travels through chamber 4. The number of heating elements 45 may run into the hundreds. In some cases, the float chamber 4 may also contain cooling elements (not shown) near the glass outlet of the chamber 4 and in the vicinity of the glass ribbon to further control the temperature of the glass ribbon 5 as it leaves chamber 4.

The melting furnace 2 is heated by means of at least one burner 21 (only a single burner 21 is represented in figures 1 and 2).

The one or more burners 21 inject fuel 23 and combustion oxidant 24 into the melting furnace 2, where the fuel combusts with the combustion oxidant so as to generate heat for melting the glass-forming material 1. In the illustrated embodiments, the combustion oxidant is "industrial oxygen" with a purity of about 92% vol.

Other heating elements (not shown), such as electric loop electrodes, may also be present in the melting furnace 2.

The combustion of the fuel 23 generates fumes 25 which leave the melting furnace at a temperature of about 1450°C.

In the embodiment illustrated in figure 1, said hot fumes 25 are introduced into the heat exchanger 60, where the hot fumes 25 are used to directly preheat a gas component 101, which corresponds to the nitrogen fraction of the gas composition 100 which is injected into the float chamber 4. Following the heat exchange between the hot fumes 25 and the gas component 101, the fumes 26 are evacuated from heat exchanger 60 and preferably subjected to a pollutant removal process before being released into the atmosphere.

In the embodiment illustrated in figure 1, the gas component 102 which has been heated in heat exchanger 60 is first introduced into heat exchanger 80 in which the combustion oxidant 23 is preheated by direct heat exchange with heated gas component 102. The thus preheated combustion oxidant 27 is then supplied to the burner(s) 21 of furnace 2. From heat exchanger 80, the heated gas component 103 is sent to heat exchanger 90 in which the fuel 24 is preheated by direct heat exchange with the heated gas component 103. The thus preheated fuel 28 is equally supplied to burner(s) 21.

The heated gas component (nitrogen) 104 leaving heat exchanger 90 is then admixed with hydrogen 105 (and optionally with other gases present in the gas composition) so as to obtain gas composition 100 which is introduced into the float chamber 4 as described above.

Using the waste energy present in the fumes of the melting furnace 2, gas composition 100 can be injected into the float chamber 4 at a substantially higher temperature, for example at 400°C, thus reducing the additional heat requirement of the float chamber 4 and the energy consumption of heating elements 45.

Although it is preferred to incorporate the preheating of combustion oxidant 23 and fuel 24 in the process of the invention, the process can also be performed without such preheating, i.e. without heat exchanger 80 and 90 (in this case temperature at which the gas composition is injected into the float chamber 4 may be higher, for example about 650°C).

In the embodiment illustrated in figure 2, the gas composition 100 circulates in a closed circuit. Such a closed circuit reduces the nitrogen and hydrogen consumption of the float chamber.

In addition, recycling of the gas composition may be necessary for environmental or economic reasons, for example when the inert gas is or contains argon or helium or when the reducing gas is or contains carbon monoxide or ammonia.

Following the controlled evacuation of the gas composition from chamber 4, the evacuated gas composition 110. In such a closed circuit, the evacuated gas composition is typically cooled in a cooling unit 111.

Thereafter, humidity (H₂O) 112 is removed from the gas composition in drying unit 113. In addition, other contaminants 114, such as H₂S, are removed in one or more purification units 115.

The dried and purified gas composition 115 is then topped up with additional nitrogen 116 and hydrogen 117 (if necessary) and optionally also with other desired components of the gas composition.

In the embodiment illustrated in figure 2, the gas mixture 118 is then heated by indirect heat exchange with the hot fumes 25 from the melting furnace 2.

In heat exchanger 60, an intermediate fluid such as air, nitrogen, CO₂, etc. is heated by direct heat exchange with the hot fumes. The thus heated intermediate fluid 201 is then introduced into heat exchanger 70 where the gas mixture 118 is heated by direct heat exchange with the heated intermediate fluid 201. The heated gas mixture is thereafter introduced into float chamber 4 as the gas composition 100.

The intermediate fluid may flow in an open circuit, in particular when the intermediate fluid is air. In the illustrated embodiment, however, the intermediate fluid flows back to heat exchanger 60 in a closed circuit. It is also possible to combine the heating of the gas composition with fuel and/or oxidant preheating. In the illustrated embodiment, the heated intermediate fluid leaving heat exchanger 70 is introduced into heat exchanger 80 in which the combustion oxidant 23 is preheated by direct heat exchange with the intermediate fluid 202 and thereafter into heat exchange 90 for preheating the fuel 24 by direct heat exchange with the heated intermediate fluid 203. Finally, the intermediate fluid is sent back to heat exchanger 60 to be heated by direct heat exchange with the hot fumes 25.

As mentioned before preheating of the oxidant 23 and the fuel 24 is not necessary, but preferred.

It will be appreciated that may variants may be envisaged.

For example, in the embodiment shown in figure 1, the order of heat exchangers 80 and 90 may be reversed or heat exchangers 80 and 90 may be in parallel with respect to the flow of heated gas component 102.

Likewise, in the embodiment of figure 2, a different order may be used for the succession of heat exchangers 70, 80 and 90. The topping up of dried purified gas composition 115 may also take place downstream of heat exchanger 70.

When the intermediate fluid 200 is nitrogen, i.e. the inert gas of the gas composition, heated nitrogen 201, 202 from the closed circuit may be used as top-up nitrogen 116 for the gas composition, after which additional (unheated) nitrogen 118 is added to the closed circuit (shown as an interrupted line and arrow in figure 2).

As further illustrated in figure 3, a control unit 300 may be used to regulate the operation of the heating elements 45 (and optionally also any cooling elements present) in the float chamber 4. This control unit regulates the operation of the heating (and cooling) elements 45 so that the desired temperature profile of the float chamber 4 and the glass 3, 5.

In general, the control unit is programmed in a manner specifically adapted to the type of glass, ribbon thickness and any coating or other glass-treatment process taking place in the float chamber 2.

Control unit may also be connected to temperature detectors in the float chamber, so that the operation of the heating (and cooling) elements 45 may be adjusted as a function of the detected actual temperature (s) in the float chamber.

When, in accordance with the present invention, a gas component, corresponding to at least part of the gas composition, has been preheated by direct or indirect heat exchange with the fumes 25 evacuated from the melting furnace 2, so that the gas composition 100 is introduced into the float chamber 4 at a higher temperature, it is desirable to determine the temperature at which said gas composition 100 is fed to the float chamber 2, for example by means of temperature detector 301 which is connected to control unit 300. In this manner, the control unit can adjust the operation of the heating elements 45 in function of the temperature with which the gas composition 100 is introduced into the float chamber 4. This embodiment also permits to take into account any changes in the temperature to which the gas composition is heated, for example due to variations in the operation of the melting furnace 2 and the corresponding changes in the temperature and/or volume of the fumes evacuated from the furnace 2.

## Claims

1. Glass production process whereby:
• molten glass (3) is produced in a melting furnace (2) heated by combustion of a fuel (24) with at an oxidant (23), said combustion generating heat and fumes, said fumes (25) being evacuated from the melting furnace (2) at a temperature between 900°C and 1550°C, preferably of at least 1000°C,
• the molten glass (3) is continuously poured into a float chamber (4) so as to form a glass ribbon (5) floating on a molten tin bath (41) inside the float chamber(4), whereafter said glass ribbon (5) is continuously evacuated from the float chamber (4) by conveyor rollers (42),
• a gas composition (100) consisting for 99.9%vol to 100%vol of an inert gas, preferably nitrogen, and a reducing gas, preferably hydrogen, is introduced into the float chamber (4) so as to maintain a reducing atmosphere above the tin bath (41) and the glass ribbon (5), said gas composition being continuously or intermittently evacuated from the float chamber (4) and replaced with new gas composition mixture,
**characterized in that**:
• a gas component, corresponding to at least part of the gas composition (100), is preheated by heat exchange with the fumes (25) evacuated from the melting furnace (2) before being introduced in the float chamber (4) as part of the gas composition (100).

2. Glass production process according to claim 1, whereby the gas component is preheated by indirect heat exchange with the fumes (25) evacuated from the melting furnace (2).

3. Glass production process according to claim 1, whereby an intermediate gas (200) is heated by direct heat exchange with the fumes (25) evacuated from the melting furnace (2) and whereby the heated intermediate gas (201) thus obtained is used to preheat said gas component by direct heat exchange with the heated intermediate gas (201), and preferably also to preheat at least one combustion reactant selected from the oxidant (24) and the fuel (23) by direct heat exchange with the heated intermediate gas(202, 203).

4. Glass production process according to claim 2 or 3, whereby the intermediate gas circulates in a closed loop.

5. Glass production process according to claim 1, whereby the gas component (101) is preheated by direct heat exchange with the fumes (25) evacuated from the melting furnace (2).

6. Glass production process according to claim 5, whereby, after having been preheated by direct heat exchange with the fumes (25) evacuated from the melting furnace (2) and before being introduced into the float chamber (4), the preheated gas component (102) is used to preheat at least one combustion reactant selected from the oxidant (24) and the fuel (23) by direct heat exchange.

7. Glass production process according to any one of claims 1 to 6, whereby the gas component consists essentially of inert gas, preferably of nitrogen.

8. Glass production process according to any one of the preceding claims, whereby the float chamber (4) has a roof (44) above the molten tin bath (41) and whereby heating elements (45) are installed in or adjacent the roof (44), the process further comprising the steps of:
- determining the temperature with which the gas composition (100) is introduced into the float chamber (4), and
- regulating the heat generated by the heating elements (45) as a function of the determined temperature.

9. Glass production installation comprising:
• a glass melting furnace (2) equipped with one or more burners for heating the furnace (2), said furnace (2) comprising a fumes outlet and a molten-glass outlet;
• a float chamber (4) downstream of the molten-glass outlet of the furnace (2), said float chamber (4) comprising a basin for containing a molten tin bath (41), a roof (44) above the basin, a molten-glass inlet, conveyor rolls (42) for evacuating a glass ribbon (5) from the float chamber (4) via a glass outlet, one or more gas inlets (43) for introducing a reducing gas composition (100) into the float chamber (4), said one or more gas inlets (43) being located in or adjacent the roof (44), and a gas outlet for evacuating said reducing gas composition from the float chamber (4),
• a heat recovery unit (60, 70, 80, 90) downstream of the fumes outlet of the melting furnace (2) and adapted for recovering heat from fumes evacuated from the melting furnace (2) via said fumes outlet
**characterized in that**:
• the heat recovery unit (60, 70, 80, 90) is connected to a source of a gas component (101, 118) selected from an inert gas (101), preferably nitrogen, and a gas composition (118) consisting for 99%vol to 100%vol of an inert gas, preferably nitrogen, and a reducing gas, preferably hydrogen, said heat recovery unit being adapted for heating said gas component (101, 118) by direct or indirect heat exchange with fumes (25) evacuated from the melting furnace (2) via the fumes outlet,
• whereby the heat recovery unit (60, 70, 80, 90) presents a gas-component outlet, the gas-component outlet being in fluid connection with at least one gas inlet (43) of the float-chamber (4) for introducing heated gas component (100) from the heat recovery unit into the float chamber (4).

10. Glass production installation according to claim 9, whereby the heat recovery unit (60, 70, 80, 90) comprises:
• a primary heat exchanger (60) for heating an intermediate gas (200) by direct heat exchange of the intermediate gas (200) with fumes (25) evacuated from the melting furnace (2) via the fumes outlet, and
• a secondary heat exchanger (70) for heating the gas component (118) by direct heat exchange with the intermediate gas (118) heated in the primary heat exchanger (60).

11. Glass production installation according to claim 10, whereby the primary heat exchanger (60) and the secondary heat exchanger (70) are integrated in a closed circulation loop of intermediate gas (200, 201, 202, 203).

12. Glass production installation according to claim 10 or 11, whereby the heat-recovery unit (60, 70, 80, 90) comprises a further heat exchanger (80, 90) for preheating a combustion reactant (23, 24) by direct heat exchange with the heated intermediate gas (202, 203) from the primary heat exchanger (60), said further heat exchanger (80, 90) being fluidly connected
• to a source of combustion reactant selected from fuel (23) and oxidant (24), and
• to at least one burner of the melting furnace (2) so as to supply the heated combustion reactant (27, 28) to said at least one burner.

13. Glass production installation according to any one of claims 9 to 12, whereby the heat-recovery unit (60, 70, 80, 90) comprises a first heat exchanger (60) for heating the gas component (101) by direct heat exchange with the fumes (25) evacuated from the melting furnace (2) via the fumes outlet.

14. Glass production installation according to claim 13 comprising a further heat exchanger (80, 90) for preheating a combustion reactant (23, 24) by direct heat exchange with the heated gas component (102, 103) from the first heat exchanger (60), said further heat exchanger (80, 90) being fluidly connected
• to a source of combustion reactant selected from fuel (23) and oxidant (24), and
• to at least one burner of the furnace (2) so as to supply the heated combustion reactant (27, 28) to said at least one burner.

15. Glass production installation according to any one of claims 9 to 14, whereby the installation further comprises:
- at least one heating element (45) mounted in or adjacent the roof (44) inside the float chamber (4),
- a temperature detector (300) adapted to determine the temperature of the reducing gas composition (100) at at least one gas inlet (43) of the float chamber (4), and
- a control unit (300) adapted to regulate the heat generation by the at least one heating element (45),
whereby the control unit (100) is connected to the temperature detector (300) and is programmed to regulate the heat generated by the at least on heating element (45) as a function of the temperature determined by the heat detector (300).

## Patentansprüche

1. Glaserzeugungsverfahren, bei dem:
• in einem Schmelzofen (2), der durch Verbrennung eines Brennstoffs (24) mit einem Oxidationsmittel (23) erhitzt wird, eine Glasschmelze (3) erzeugt wird, wobei die Verbrennung Wärme und Abgase generiert, wobei die Abgase (25) aus dem Schmelzofen (2) bei einer Temperatur zwischen 900 °C und 1550 °C und vorzugsweise bei mindestens 1000 °C, ausgebracht werden,
• die Glasschmelze (3) kontinuierlich in eine Schwimmerkammer (4) gegossen wird, sodass sie ein Glasband (5) bildet, das auf einem Bad aus flüssigem Zinn (41) innerhalb der Schwimmerkammer (4) schwimmt, wobei das Glasband (5) mithilfe von Förderrollern (42) kontinuierlich aus der Schwimmerkammer (4) ausgebracht wird,
• eine Gaszusammensetzung (100) bestehend zu 99,9 Volumenprozent bis 100 Volumenprozent aus einem inerten Gas, vorzugsweise Stickstoff, und einem reduzierenden Gas, vorzugsweise Wasserstoff, die in die Schwimmerkammer (4) eingebracht wird, um über dem Zinnbad (41) und dem Glasband (5) eine reduzierende Atmosphäre aufrechtzuerhalten, wobei die Gaszusammensetzung kontinuierlich oder intermittierend aus der Schwimmerkammer (4) ausgebracht und durch eine neue Gaszusammensetzung ersetzt wird,
**dadurch gekennzeichnet, dass**:
• ein gasförmiger Bestandteil, der zumindest Teil der Gaszusammensetzung (100) ist, durch Wärmeaustausch mit den Abgasen (25) vorgeheizt wird, das aus dem Schmelzofen (2) ausgebracht wird, bevor es als Teil der Gaszusammensetzung (100) in die Schwimmerkammer (4) eingebracht wird.

2. Glaserzeugungsverfahren nach Anspruch 1, wobei der gasförmige Bestandteil durch indirekten Wärmeaustausch mit den aus dem Schmelzofen (2) ausgebrachten Abgasen (25) vorgeheizt wird.

3. Glaserzeugungsverfahren nach Anspruch 1, wobei ein Zwischengas (200) durch direkten Wärmeaustausch mit den aus dem Schmelzofen (2) ausgebrachten Abgasen (25) erhitzt wird und wobei das so erhaltene erhitzte Zwischengas (201) dazu benutzt wird, um den gasförmigen Bestandteil durch direkten Wärmeaustausch mit dem erhitzten Zwischengas (201) vorzuheizen und um vorzugsweise auch mindestens einen aus Oxidationsmittel (24) und Brennstoff (23) ausgewählten Verbrennungsreaktanten durch direkten Wärmeaustausch mit dem erhitzten Zwischengas (202, 203) vorzuheizen.

4. Glaserzeugungsverfahren nach Anspruch 2 oder 3, wobei das Zwischengas in einem geschlossenen Kreislauf zirkuliert.

5. Glaserzeugungsverfahren nach Anspruch 1, wobei der gasförmige Bestandteil (101) durch direkten Wärmeaustausch mit den aus dem Schmelzofen (2) ausgebrachten Abgasen (25) vorgeheizt wird.

6. Glaserzeugungsverfahren nach Anspruch 5, wobei der vorgeheizte gasförmige Bestandteil (102), nachdem er durch direkten Wärmeaustausch mit den aus dem Schmelzofen (2) ausgebrachten Abgasen (25) erhitzt wurde und bevor er in die Schwimmerkammer (4) eingebracht wird, dazu genutzt wird, mindestens einen aus Oxidationsmittel (24) und Brennstoff (23) ausgewählten Verbrennungsreaktanten durch direkten Wärmeaustausch vorzuheizen.

7. Glaserzeugungsverfahren nach einem der Ansprüche 1 bis 6, wobei der gasförmige Bestandteil im Wesentlichen aus einem inerten Gas, vorzugsweise aus Stickstoff, besteht.

8. Glaserzeugungsverfahren nach einem der vorstehenden Ansprüche, wobei die Schwimmerkammer (4) ein Dach (44) über dem geschmolzenen Zinnbad (41) aufweist und wobei im oder angrenzend an das Dach (44) Heizelemente (45) installiert sind, das Verfahren weiter die folgenden Schritte umfassend:
- Bestimmung der Temperatur, mit der die Gaszusammensetzung (100) in die Schwimmerkammer (4) eingebracht wird, und
- Regulierung der von den Heizelementen (45) generierten Wärme in Abhängigkeit von der bestimmten Temperatur.

9. Glaserzeugungsinstallation umfassend:
• einen Glasschmelzofen (2) ausgestattet mit einem oder mehreren Brennern zum Erhitzen des Ofens (2), wobei der Ofen (2) einen Auslass für Abgase und einen Auslass für Glasschmelze umfasst,
• eine dem Auslass für Glasschmelze des Ofens (2) nachgelagerte Schwimmerkammer (4), wobei die Schwimmerkammer (4) ein Becken zum Enthalten eines geschmolzenen Zinnbads (41), ein Dach (44) über dem Becken, einen Einlass für Glasschmelze, Förderrollen (42) zum Ausbringen des Glasbandes (5) aus der Schwimmerkammer (4) über einen Glasauslass umfasst, einen oder mehrere Gaseinlässe (43) zum Einbringen einer reduzierenden Gaszusammensetzung (100) in die Schwimmerkammer (4), wobei sich der eine oder mehrere Gaseinlässe (43) im oder angrenzend an das Dach (44) befinden, und ein Gasauslass zum Ausbringen der reduzierenden Gaszusammensetzung aus der Schwimmerkammer (4),
• eine Einheit zur Wärmerückgewinnung (60, 70, 80, 90), dem Auslass für Abgase des Schmelzofens (2) nachgelagert und angepasst zur Rückgewinnung der Wärme aus den Abgasen, die aus dem Schmelzofen (2) über den Abgasauslass ausgebracht werden,
**dadurch gekennzeichnet, dass**:
• die Einheit zur Wärmerückgewinnung (60, 70, 80, 90) mit einer Quelle für einen gasförmigen Bestandteil (101, 118) verbunden ist, der aus einem inerten Gas (101), vorzugsweise Stickstoff, ausgewählt wird und einer Gaszusammensetzung (118), die zu 99 Volumenprozent bis 100 Volumenprozent aus einem inerten Gas, vorzugsweise Stickstoff, und einem reduzierenden Gas, vorzugsweise Wasserstoff besteht, wobei die Einheit zur Wärmerückgewinnung zum Erhitzen des gasförmigen Bestandteils (101, 118) durch direkten oder indirekten Wärmeaustausch mit Abgasen (25) angepasst ist, die über den Abgasauslass aus dem Schmelzofen (2) ausgebracht werden,
• wobei die Einheit zur Wärmerückgewinnung (60, 70, 80, 90) einen Auslass für einen gasförmigen Bestandteil aufweist, wobei sich der Auslass für einen gasförmigen Bestandteil in Fluidverbindung mit mindestens einem Gaseinlass (43) der Schwimmerkammer (4) befindet, um den erhitzten gasförmigen Bestandteil (100) von der Einheit zur Wärmerückgewinnung in die Schwimmerkammer (4) einzubringen.

10. Glaserzeugungsinstallation nach Anspruch 9, wobei die Einheit zur Wärmerückgewinnung (60, 70, 80, 90) umfasst:
• einen primären Wärmetauscher (60) zum Erhitzen des Zwischengases (200) durch direkten Wärmeaustausch des Zwischengases (200) mit den über den Abgasauslass aus dem Schmelzofen (2) ausgebrachten Abgasen (25), und
• einen sekundären Wärmetauscher (70) zum Erhitzen des gasförmigen Bestandteils (118) durch direkten Wärmeaustausch mit dem Zwischengas (118), das in dem primären Wärmetauscher (60) erhitzt wird.

11. Glaserzeugungsinstallation nach Anspruch 10, wobei der primäre Wärmetauscher (60) und der sekundäre Wärmetauscher (70) in einen geschlossenen Kreislauf von Zwischengas (200, 201, 202, 203) integriert sind.

12. Glaserzeugungsinstallation nach Anspruch 10 oder 11, wobei die Einheit zur Wärmerückgewinnung (60, 70, 80, 90) einen weiteren Wärmetauscher (80, 90) zum Vorheizen eines Verbrennungsreaktanten (23, 24) durch direkten Wärmeaustauch mit dem erhitzten Zwischengas (202, 203) aus dem primären Wärmetauscher (60) umfasst, wobei der weitere Wärmetauscher (80, 90) in Fluidverbindung steht
• mit einer Quelle aus den Verbrennungsreaktanten, ausgewählt aus Brennstoff (23) und Oxidationsmittel (24), und
• mit mindestens einem Brenner des Schmelzofens (2), sodass der mindestens eine Brenner mit dem erhitzten Verbrennungsreaktanten (27, 28), versorgt wird.

13. Glaserzeugungsinstallation nach einem der Ansprüche 9 bis 12, wobei, die Einheit zur Wärmerückgewinnung (60, 70, 80, 90) einen ersten Wärmetauscher (60) zum Erhitzen des gasförmigen Bestandteils (101) durch direkten Wärmeaustausch mit den über den Abgasauslass aus dem Schmelzofen (2) ausgebrachten Abgasen (25) umfasst.

14. Glaserzeugungsinstallation nach Anspruch 13, umfassend einen weiteren Wärmetauscher (80, 90) zum Vorheizen eines Verbrennungsreaktanten (23, 24) durch direkten Wärmetausch mit dem erhitzten gasförmigen Bestandteil (102, 103) aus dem ersten Wärmetauscher (60), wobei der weitere Wärmetauscher (80, 90) in Fluidkontakt steht
• mit einer Quelle aus den Verbrennungsreaktanten, ausgewählt aus Brennstoff (23) und Oxidationsmittel (24), und
• mit mindestens einem Brenner des Schmelzofens (2), sodass der mindestens eine Brenner mit dem erhitzten Verbrennungsreaktanten (27, 28), versorgt wird.

15. Glaserzeugungsinstallation nach einem der Ansprüche 9 bis 14, wobei die Installation weiter umfasst:
- mindestens ein Heizelement (45), montiert in oder angrenzend an das Dach (44) innerhalb der Schwimmerkammer (3),
- einen Temperaturmessfühler (300) der angepasst ist zur Bestimmung der Temperatur der Zusammensetzung des reduzierenden Gases (100) an mindestens einem Gaseinlass (43) der Schwimmerkammer (4), und
- eine Steuereinheit (300), die angepasst ist zur Regulierung der Wärmegenerierung durch das mindestens eine Heizelement (45),
wobei die Steuereinheit (100) mit dem Temperaturmessfühler (300) verbunden und dazu programmiert ist, die Wärmegenerierung durch das mindestens eine Heizelement (45) in Abhängigkeit von der vom Temperaturmessfühler (300) ermittelten Temperatur zu regulieren.

## Revendications

1. Procédé de production de verre dans lequel :
• du verre fondu (3) est produit dans un four de fusion (2) chauffé par combustion d'un carburant (24) avec un oxydant (23), ladite combustion produisant de la chaleur et des fumées, lesdites fumées (25) étant évacuées depuis le four de fusion (2) à une température entre 900 °C et 1 550 °C, de préférence d'au moins 1 000 °C,
• le verre fondu (3) est versé de façon continue dans une chambre de type float (4) afin de former un ruban de verre (5) flottant sur un bain d'étain fondu (41) à l'intérieur de la chambre de type float (4), après quoi ledit ruban de verre (5) est évacué de façon continue depuis la chambre de type float (4) par des rouleaux transporteurs (42),
• une composition de gaz (100) consistant en 99,9 % en volume à 100% en volume d'un gaz inerte, de préférence de l'azote et en un gaz réducteur, de préférence de l'hydrogène, est introduit dans la chambre de type float (4) afin de maintenir une atmosphère réductrice au-dessus du bain d'étain (41) et du ruban de verre (5), ladite composition de gaz étant évacuée de façon continue ou par intermittence depuis la chambre de type float (4) et est remplacée par un nouveau mélange de composition de gaz,
**caractérisé en ce que** :
• un composant de gaz, correspondant à au moins une partie de la composition de gaz (100), est préchauffé par échange de chaleur avec les fumées (25) évacuées depuis le four de fusion (2) avant d'être introduit dans la chambre de type float (4) en tant que partie de la composition de gaz (100).

2. Procédé de production de verre selon la revendication 1, dans lequel le composant de gaz est préchauffé par échange de chaleur indirect avec les fumées (25) évacuées depuis le four de fusion (2).

3. Procédé de production de verre selon la revendication 1, dans lequel un gaz intermédiaire (200) est chauffé par échange de chaleur direct avec les fumées (25) évacuées depuis le four de fusion (2) et dans lequel le gaz intermédiaire chauffé (201) ainsi obtenu est utilisé pour préchauffer ledit composant de gaz par échange de chaleur direct avec le gaz intermédiaire chauffé (201) et de préférence également pour préchauffer au moins un réactif de combustion sélectionné parmi l'oxydant (24) et le carburant (23) par échange de chaleur direct avec le gaz intermédiaire chauffé (202, 203).

4. Procédé de production de verre selon la revendication 2 ou 3, dans lequel le gaz intermédiaire circule en boucle fermée.

5. Procédé de production de verre selon la revendication 1, dans lequel le composant de gaz (101) est préchauffé par échange de chaleur direct avec les fumées (25) évacuées depuis le four de fusion (2).

6. Procédé de production de verre selon la revendication 5, dans lequel, après avoir été préchauffé par échange de chaleur direct avec les fumées (25) évacuées depuis le four de fusion (2) et avant introduction dans la chambre de type float (4), le composant de gaz préchauffé (102) est utilisé pour préchauffer au moins un réactif de combustion sélectionné parmi l'oxydant (24) et le carburant (23) par échange de chaleur direct.

7. Procédé de production de verre selon l'une quelconque des revendications 1 à 6, dans lequel le composant de gaz consiste sensiblement en gaz inerte, de préférence en azote.

8. Procédé de production de verre selon l'une quelconque des revendications précédentes, dans lequel la chambre de type float (4) possède un toit (44) au-dessus du bain d'étain fondu (41) et dans lequel des éléments chauffants (45) sont installés dans ou adjacents au toit (44), le procédé comprenant en outre les étapes de :
- détermination de la température avec laquelle la composition de gaz (100) est introduite dans la chambre de type float (4), et
- régulation de la chaleur produite par les éléments chauffants (45) en fonction de la température déterminée.

9. Installation de production de verre comprenant :
• un four de fusion de verre (2) équipé d'un ou plusieurs brûleurs pour chauffer le four (2), ledit four (2) comprenant une sortie d'fumées et une sortie de verre fondu ;
• une chambre de type float (4) en aval de la sortie de verre fondu du four (2), ladite chambre de type float (4) comprenant un bassin pour contenir un bain d'étain fondu (41), un toit (44) au-dessus du bassin, une entrée de verre fondu, des rouleaux transporteurs (42) pour évacuer un ruban de verre (5) depuis la chambre de type float (4) via une sortie de verre, une ou plusieurs entrées de gaz (43) pour introduire une composition de gaz réducteur (100) dans la chambre de type float (4), lesdites une ou plusieurs entrées de gaz (43) étant situées dans ou adjacentes au toit (44), et une sortie de gaz pour évacuer ladite composition de gaz réducteur depuis la chambre de type float (4),
• une unité de récupération de chaleur (60, 70, 80, 90) en aval de la sortie d'fumées du four de fusion (2) et conçue pour récupérer la chaleur provenant des fumées évacuées depuis le four de fusion (2) via ladite sortie d'fumées
**caractérisée en ce que** :
• l'unité de récupération de chaleur (60, 70, 80, 90) est reliée à une source d'un composant de gaz (101, 118) sélectionnée parmi un gaz inerte (101), de préférence de l'azote, et une composition de gaz (118) consistant en 99 % en volume à 100 % en volume d'un gaz inerte, de préférence de l'azote, et en un gaz réducteur, de préférence de l'hydrogène, ladite unité de récupération de chaleur étant conçue pour chauffer ledit composant de gaz (101, 118) par échange de chaleur direct ou indirect avec des fumées (25) évacuées depuis le four de fusion (2) via la sortie d'fumées,
• dans laquelle l'unité de récupération de chaleur (60, 70, 80, 90) présente une sortie de composant de gaz, la sortie de composant de gaz étant en connexion à fluide avec au moins une entrée de gaz (43) de la chambre de type float (4) pour introduire le composant de gaz chauffé (100) provenant de l'unité de récupération de chaleur jusque dans la chambre de type float (4).

10. Installation de production de verre selon la revendication 9, dans laquelle l'unité de récupération de chaleur (60, 70, 80, 90) comprend :
• un échangeur de chaleur primaire (60) pour chauffer un gaz intermédiaire (200) par échange de chaleur direct du gaz intermédiaire (200) avec des fumées (25) évacuées depuis le four de fusion (2) via la sortie d'fumées, et
• un échangeur de chaleur secondaire (70) pour chauffer le composant de gaz (118) par échange de chaleur direct avec le gaz intermédiaire (118) chauffé dans l'échangeur de chaleur primaire (60).

11. Installation de production de verre selon la revendication 10, dans laquelle l'échangeur de chaleur primaire (60) et l'échangeur de chaleur secondaire (70) sont intégrés dans une boucle de circulation fermée de gaz intermédiaire (200, 201, 202, 203).

12. Installation de production de verre selon la revendication 10 ou 11, dans laquelle l'unité de récupération de chaleur (60, 70, 80, 90) comprend un échangeur de chaleur supplémentaire (80, 90) pour préchauffer un réactif de combustion (23, 24) par échange de chaleur direct avec le gaz intermédiaire chauffé (202, 203) en provenance de l'échangeur de chaleur primaire (60), ledit échangeur de chaleur supplémentaire (80, 90) étant relié à fluide
• à une source de réactif de combustion sélectionné parmi un carburant (23) et un oxydant (24), et
• à au moins un brûleur particulier du four de fusion (2) afin de fournir le réactif de combustion chauffé (27, 28) audit au moins un brûleur particulier.

13. Installation de production de verre selon l'une quelconque des revendications 9 à 12, dans laquelle l'unité de récupération de chaleur (60, 70, 80, 90) comprend un premier échangeur de chaleur (60) pour chauffer le composant de gaz (101) par échange de chaleur direct avec les fumées (25) évacuées du four de fusion (2) via la sortie d'fumées.

14. Installation de production de verre selon la revendication 13, comprenant un échangeur de chaleur supplémentaire (80, 90) pour préchauffer un réactif de combustion (23, 24) par échange de chaleur direct avec le composant de gaz chauffé (102, 103) provenant du premier échangeur de chaleur (60), ledit échangeur de chaleur supplémentaire (80, 90) étant relié à fluide
• à une source de réactif de combustion sélectionné parmi un carburant (23) et un oxydant (24), et
• à au moins un brûleur particulier du four (2) afin de fournir le réactif de combustion chauffé (27, 28) audit au moins un brûleur particulier.

15. Installation de production de verre selon l'une quelconque des revendications 9 à 14, l'installation comprenant en outre :
- au moins un élément chauffant (45) monté dans ou adjacent au toit (44) à l'intérieur de la chambre de type float (4),
- un détecteur de température (300) conçu pour déterminer la température de la composition de gaz réducteur (100) au niveau d'au moins une entrée de gaz (43) de la chambre de type float (4), et
- une unité de commande (300) conçue pour réguler la production de chaleur par l'au moins un élément chauffant (45),
dans laquelle l'unité de commande (100) est reliée au détecteur de température (300) et est programmée pour réguler la chaleur produite par l'au moins un élément chauffant (45) comme une fonction de la température déterminée par le détecteur de chaleur (300).
